# EUROPÄISCHE PATENTSCHRIFT

(11) **EP 1 036 527 B1**
(45) Veröffentlichungstag und Bekanntmachung des Hinweises auf die Patenterteilung: **03.09.2003**
(21) Anmeldenummer: 00103574.0
(22) Anmeldetag: 19.02.2000
(51) Int. Cl.: A47C 3/30, F16F 9/56

(54) **Längenverstellbare Säule für Stühle, Tische o.dgl. und Längenverstellelement hierfür**
Length adjustable column for chairs, tables etc. and length adjuster for this
Colonne à réglage en hauteur pour sièges, tables etc. et réglage de longueur pour cela

(30) Priorität: 18.03.1999 DE 29904980 U
(43) Veröffentlichungstag der Anmeldung: 20.09.2000
(73) Patentinhaber: SUSPA Compart GmbH, 92237 Sulzbach-Rosenberg (DE)
(72) Erfinder: Sendfeld, Norbert, Dr., 85302 Gerolsbach (DE); Ströber, Günter, 95473 Creussen (DE)
(74) Vertreter: Rau, Manfred, Dr. Dipl.-Ing.

(56) Entgegenhaltungen:
- EP-A- 0 274 284
- US-A- 4 969 619
- US-A- 5 321 966
- US-A- 5 816 088

## Beschreibung

Die Erfindung betrifft eine längenverstellbare Säule nach dem Oberbegriff des Anspruches 1 und ein Längenverstellelement hierfür nach dem Oberbegriff des Anspruches 3.

Derartige längenverstellbare Säulen sind aus der EP 0 366 889 B1 (entsprechend US-PS 4,969,619) bekannt. Bei diesen längenverstellbaren Säulen und den darin eingesetzten Längenverstellelementen, bei denen es sich regelmäßig um längenverstellbare Gasfedern handelt, ist die Oberfläche, d. h. die Außenwand des Gehäuses des Längenverstellelements, geschliffen und dann verchromt oder brüniert, wobei das Schleifen notwendig ist, um eine einwandfreie Führung in der Führungsbüchse des Standrohres zu gewährleisten. Insbesondere muß die Oberflächenrauhigkeit der Außenwand des Gehäuses sehr gering sein, damit kein unnötiger Verschleiß in der Führungsbüchse auftritt, die regelmäßig aus Kunststoff besteht, wodurch die radiale Spielfreiheit verloren gehen würde. Insbesondere bei brünierten Oberflächen hat sich gezeigt, daß die Brünierung mit der Zeit aufgrund der Reibung in der Führungsbüchse leidet.

Der Erfindung liegt die Aufgabe zugrunde, eine längenverstellbare Säule und ein Längenverstellelement hierfür der jeweils gattungsgemäßen Art so auszugestalten, daß die Lebensdauer der Brünierung der Oberfläche der Außenwand des Längenverstellelements erhöht wird.

Diese Aufgabe wird erfindungsgemäß bei einer längenverstellbaren Säule der gattungsgemäßen Art durch die Merkmale im Kennzeichnungsteil des Anspruches 1 und bei einem Längenverstellelement nach dem Oberbegriff des Anspruches 3 durch die Merkmale in dessen Kennzeichnungsteil gelöst.

Durch die Ausgestaltung des Längenverstellelementes gemäß der Erfindung wird nicht nur erreicht, daß das aufwendige Schleifen der Oberfläche der Außenwand des Gehäuses durch das einfachere Kugelstrahlen ersetzt wird; es wird auch erreicht, daß die nach dem Kugelstrahlen aufgebrachte Brünierung länger hält. Der Grund mag darin liegen, daß die Oberfläche durch das Brünieren eine extrem fein genarbte Struktur erhält, wobei nur die oberen Ränder der winzigen, durch das Kugelstrahlen erzeugten Vertiefungen an der Führungsbüchse zur Anlage kommen und nur dort die Brünierung im Laufe der Zeit abgeschliffen wird, während sie in den Vertiefungen erhalten bleibt. Optisch bleibt sie damit insgesamt länger erhalten.

Wenn das Kugelstrahlen besonders intensiv ausgeführt wird, dann können sich an den Rändern der Narben Stege bilden, die etwas zu ausgeprägt sind. In diesen Fällen kann es von Vorteil sein, wenn entsprechend der Ansprüche 2 bzw. 4 die Oberfläche präge-poliert ist, d. h. diese Stege mittels sogenannter Polierrollen, die unter Druck über die Oberfläche geführt werden, etwas geglättet werden.

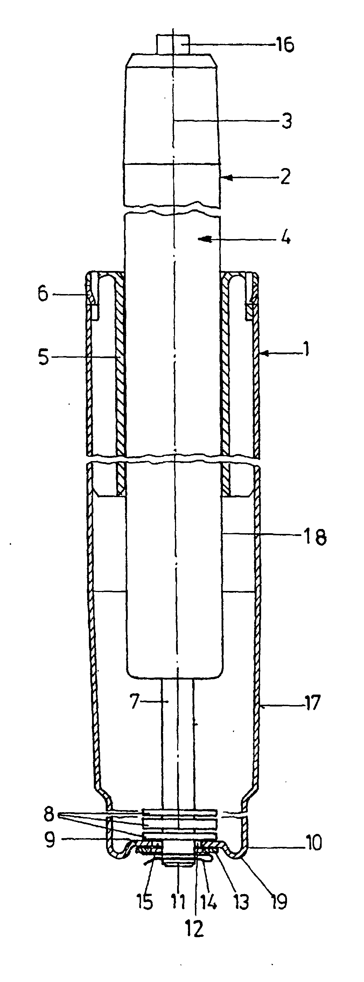

Einzelheiten der Erfindung ergeben sich aus der nachfolgenden Beschreibung eines Ausführungsbeispiels anhand der Zeichnung, die eine längenverstellbare Säule nach der Erfindung in teilweise aufgebrochener Darstellung zeigt.

Die in der Zeichnung dargestellte Stuhl-Säule weist ein Standrohr 1 auf, in dem eine längenverstellbare Gasfeder 2 als pneumatisches oder hydropneumatisches Kolben-Zylinder-Verstellelement angeordnet ist. Das Standrohr 1 und die Gasfeder 2 haben eine gemeinsame Mittel-Längs-Achse 3.

Ein äußeres Gehäuse 4 der Gasfeder 2 ist in Richtung der Achse 3 verschiebbar in einer aus einem geeigneten Kunststoff bestehenden Führungsbüchse 5 radial weitgehend spielfrei und axial verschiebbar abgestützt, die an einem - in der Zeichnung oberen - Ende 6 des Standrohres 1 angeordnet ist. Bei diesem äußeren Gehäuse 4 der Gasfeder 2 kann es sich um deren Gehäuse selber handeln oder um ein dieses außen umgebendes Schutzrohr.

Aus dem Gehäuse 4 der Gasfeder 2 ragt eine Kolbenstange 7 heraus, die über ein Axial-Wälzlager 8 gegenüber einem Boden 9 des Standrohres 1 in Richtung der Achse 3 abgestützt ist. Der Boden 9 befindet sich an dem dem einen Ende 6 entgegengesetzten anderen - in der Zeichnung unten dargestellten - Ende 10 des Standrohres 1. Ein das Axial-Wälzlager 8 durchsetzender Zapfen 11 der Kolbenstange 7 erstreckt sich durch eine zur Achse 3 konzentrisch ausgebildete Öffnung 12 im Boden 9. Er ist gegen die Unterseite des Bodens 9 mittels einer Beilagscheibe 13 und eines Feder-Sicherungsrings 14 gegen ein Herausziehen gesichert. Der Durchmesser der Öffnung 12 ist größer als der Durchmesser des Zapfens 11. Durch diese geschilderte Befestigung ist die Gasfeder 2 gegenüber dem Standrohr 1 drehbar. Sie ist aufgrund des radialen Spiels 15 zwischen Zapfen 11 und Öffnung 12 in geringem Maße gegenüber dem Standrohr 1 neigbar, also verkantungsfrei in der Führungsbüchse 5 geführt. Sie ist schließlich mit ihrer Kolbenstange 7 in Richtung der Achse 3 gegenüber dem Standrohr 1 festgelegt, so daß bei Längenverstellungen der Gasfeder 2 durch Betätigung eines Betätigungsstiftes 16 das Gehäuse 4 der Gasfeder 2 aus dem Standrohr 1 herausgefahren oder in dieses hineingeschoben wird. Der Betätigungsstift 16 befindet sich an dem der Kolbenstange 7 entgegengesetzten Ende des Gehäuses 4 der Gasfeder 2. Hier wird auch ein Stuhlsitz oder eine Tischplatte befestigt.

Das Standrohr 1 weist benachbart zum Ende 10 einen sich zu diesem hin leicht konisch verjüngenden Konusabschnitt 17 auf, mittels dessen eine Befestigung des Standrohres 1 in einer entsprechenden Konusbüchse eines Stuhlkreuzes o. dgl. möglich ist.

Soweit die primär als Stuhl-Säule, aber auch als Säule für Tische o. dgl. dienende Säule bisher beschrieben ist, ist sie allgemein bekannt, handelsüblich und beispielsweise in der DE-PS 19 31 012 (entsprechend US-PS 3,711,054) und der EP 0 133 524 B1 (entsprechend US-PS 4,979,718) oder der EP 0 366 889 B1 (entsprechend US-PS 4,969,619) beschrieben und dargestellt.

Die Oberfläche 18 des Gehäuses 4 ist mittels Kugelstrahlen anstelle von Schleifen behandelt, wodurch die Oberfläche geglättet und verdichtet wird. Die Oberfläche hat eine im µm-Bereich liegende Oberflächennarbung, die in der Zeichnung nicht ersichtlich ist. Nach dem Kugelstrahlen ist die Oberfläche 18 brüniert worden, so daß die zeichnerisch ebenfalls nicht darstellbare Brünierschicht auf der kugelgestrahlten Oberfläche 18 angebracht ist. Die Oberfläche 18 kann nach dem Aufbringen der Brünierschicht noch präge-poliert sein.

Bei den Bewegungen zwischen der brünierten Oberfläche 18 und der Führungsbüchse 5 tritt im wesentlichen ein Kontakt nur zwischen den Rändern der erwähnten Oberflächennarbung und der Führungsbüchse 5 auf, nur in diesem Bereich kann also die Brünierung abgerieben werden.

## Patentansprüche

1. Längenverstellbare Säule für Stühle, Tische o. dgl. mit einem Standrohr (1) und mit einem konzentrisch zu einer gemeinsamen Mittel-Längs-Achse (3) hierin angeordneten, pneumatischen oder hydropneumatischen Längenverstellelement, dessen Gehäuse (4) eine äußere Oberfläche (18) aufweist, die in einer im Standrohr angeordneten Führungsbüchse (5) radial abgestützt und in Richtung der Achse (3) verschiebbar geführt ist, **dadurch gekennzeichnet,**
**daß** die äußere Oberfläche (18) des Gehäuses (4) ungeschliffen, kugelgestrahlt und brüniert ist.

2. Längenverstellbare Säule nach Anspruch 1, **dadurch gekennzeichnet, daß** die äußere Oberfläche über der Brünierschicht präge-poliert ist.

3. Längenverstellelement für eine längenverstellbare Säule für Stühle, Tische o. dgl., in der konzentrisch zu einer gemeinsamen Mittel-Längs-Achse (3) das pneumatische oder hydropneumatische Längenverstellelement mit der äußeren Oberfläche (18) seines Gehäuses (4) in einer im Standrohr (1) angeordneten Führungsbüchse (5) radial abgestützt und in Richtung der Achse (3) verschiebbar geführt ist, **dadurch gekennzeichnet,**
**daß** die äußere Oberfläche (18) des Gehäuses (4) ungeschliffen, kugelgestrahlt und brüniert ist.

4. Längenverstellelement nach Anspruch 3, **dadurch gekennzeichnet, daß** die äußere Oberfläche über der Brünierschicht präge-poliert ist.

## Claims

1. An adjustable length column for chairs, tables or the like, comprising an upright tube (1) and a pneumatic or hydropneumatic length adjusting element, which is disposed therein concentrically of a common central longitudinal axis (3), and the housing (4) of which has an outer surface (18), which is guided for displacement in the direction of the axis (3) and radially supported in a guide bush (5) which is disposed in the upright tube,
**characterized**
**in that** the outer surface (18) of the housing (4) is unpolished, shot peened and has a browned layer.

2. An adjustable length column according to claim 1, **characterized**
**in that** the outer surface is burnished on the browned layer.

3. A length adjusting element for adjustable length columns for chairs, tables or the like, in which the pneumatic or hydropneumatic length adjusting element, by the outer surface (18) of its housing (4), is radially supported and displaceably guided in the direction of the axis (3) in a guide bush (5) which is disposed in the upright tube (1), **characterized**
**in that** the outer surface (18) of the housing (4) is unpolished, shot peened and has a browned layer.

4. A length adjusting element according to claim 3, **characterized**
**in that** the outer surface is burnished on the browned layer.

## Revendications

1. Colonne réglable en longueur pour des chaises, tables ou analogues comportant un tube vertical (1) et un élément de réglage en longueur, pneumatique ou hydropneumatique, agencé dans celui-ci concentriquement à un axe longitudinal médian commun (3), dont le logement (4) présente une surface extérieure (18) qui s'appuie radialement dans une douille de guidage (5) disposée dans le tube vertical et qui est guidé en coulissement dans la direction de l'axe (3), **CARACTERISEE EN CE QUE**
la surface extérieure (18) du logement (4) est brute, grenaillée et brunie.

2. Colonne réglable en longueur selon la revendication 1, **CARACTERISEE EN CE QUE**
la surface extérieure au-dessus de la couche de brunissage est polie en pression.

3. Elément de réglage en longueur pour une colonne réglable en longueur pour des chaises, tables ou analogues, dans lequel concentriquement à un axe longitudinal commun (3) l'élément de réglage en longueur pneumatique ou hydropneumatique s'appuie radialement par la surface extérieure (18) de son logement (4) dans une douille de guidage (5) agencée dans le tube vertical (1) et est guidé en coulissement en direction de l'axe (3), **CARACTERISE EN CE QUE**
la surface extérieure (19) du logement (4) est brute, grenaillée et brunie.

4. Elément de réglage en longueur selon la revendication 3, **CARACTERISE EN CE QUE**
la surface extérieure au-dessus de la couche de brunissage est polie en pression.
